Europäisches Patentamt

European Patent Office

Office européen des brevets

(11) Veröffentlichungsnummer: **0 187 208**
A1

(12) **EUROPÄISCHE PATENTANMELDUNG**

(21) Anmeldenummer: 85113272.0

(22) Anmeldetag: 19.10.85

(51) Int. Cl.⁴: **A 47 J 43/10**
A 47 J 43/28

(30) Priorität: 05.01.85 DE 8500150 U

(43) Veröffentlichungstag der Anmeldung:
16.07.86 Patentblatt 86/29

(84) Benannte Vertragsstaaten:
AT BE CH DE FR GB IT LI LU NL SE

(71) Anmelder: Reppel & Vollmann GmbH & Co
Friedrich-Ebert-Strasse 274
D-5883 Kierspe(DE)

(72) Erfinder: Vollmann, Carl-Heinz
Friedrich-Ebert-Strasse 271
D-5883 Kierspe(DE)

(74) Vertreter: Patentanwälte Dipl.-Ing. Conrad Köchling
Dipl.-Ing. Conrad-Joachim Köchling
Fleyer Strasse 135
D-5800 Hagen 1(DE)

(54) Griff für Küchengeräte.

(57) Um bei einem Griff für Küchengeräte wie Schneebesen, Quirle, Salatbestecke und dergleichen, bestehend aus einem am Küchengerät befestigbaren bzw. mit diesem einstückig ausgebildeten Stiel mit einer Verdickung am freien Endteil, wobei der Stiel im wesentlichen kreisförmige Querschnitte aufweist und die Verdickung etwa pilzförmig überstehend ausgebildet ist, die Handhabung zu verbessern, wird vorgeschlagen, daß am geräteseitigen Endteil des Stieles (1) ein etwa radial vorstehender Flansch (4) angeordnet ist.

Fig.3

Croydon Printing Company Ltd.

EP 0 187 208 A1

PATENTANWÄLTE

DIPL.-ING. CONRAD KÖCHLING

DIPL.-ING. CONRAD-JOACHIM KÖCHLING

Fleyer Straße 135, 5800 Hagen
Ruf (0 23 31) 8 11 64 – 8 50 33
Telegramme: Patentköchling Hagen

Konten: Commerzbank AG. Hagen
(BLZ 450 400 42) 3 515 095
Sparkasse Hagen 100 012 043
Postscheck: Dortmund 5989 - 460

VNR: 47

Lfd. Nr. A 5880/85

vom 16. Oktober 1985

- 1 -

## Griff für Küchengeräte

Die Erfindung betrifft einen Griff für Küchengeräte der im Oberbegriff des Anspruches 1 angegebenen und durch das DE-GM 82 12 981 bekanntgewordenen Art.

Dieser Griff hat den Vorteil, daß durch die am
freien Ende des Griffes angeordnete, allseitig vorstehende Verdickung das in eine Schüssel oder
dergleichen eingesteckte Küchengerät nach dem
Loslassen durch den Benutzer nicht selbsttätig
in die Schüssel oder dergleichen gänzlich hineinrutschen kann, sondern mit der Verdickung
am Schüsselrand hängenbleibt.

- 2 -

Aufgabe der Erfindung ist es nun, einen Griff für Küchengeräte der im Oberbegriff des Anspruches 1 angegebenen Art derart zu verbessern, daß eine weitere Erleichterung der Handhabung erreichbar ist.

Die Lösung dieser Aufgabe ist dadurch gekennzeichnet, daß am geräteseitigen Endteil des Stieles ein etwa radial vorstehender Flansch angeordnet ist.

Hierdurch ist es nunmehr möglich, den Griff mit seinem freien Endteil neben einer Schüssel oder dergleichen abzustützen und mit dem Flansch an den Rand der Schüssel so anzuhängen, daß am Küchengerät anhaftende Flüssigkeit oder dergleichen in die Schüssel abtropfen kann. Auch kann das Küchengerät in die Schüssel oder dergleichen zielend mit dem Flansch am Schüsselrand angehängt werden.

Darüber hinaus wird eine quirlende Bewegung des Küchengerätes erheblich erleichtert, weil beim Quirlen das von den Händen erfaßte Küchengerät in axialer Richtung durch die Verdickung und den Flansch zwangsläufig lagerichtig geführt ist.

Dabei ist es im Sinne der Aufgabe förderlich, wenn der Flansch zumindest annähernd die Form eines Kreises aufweist und daß der Flanschdurchmesser mehr als dem doppelten Stieldurchmesser entspricht.

Außerdem ist es vorteilhaft, wenn der Flansch und die Verdickung am Stiel angeformt sind.

Eine weitere vorteilhafte und die Handhabung, insbesondere beim Quirlen begünstigende Ausgestaltung besteht darin, daß die dem Gerät abgewandte Stirnseite des Flansches konvex gewölbt ist.

Eine vorteilhafte Weiterbildung des vorbeschriebenen Griffes ist dadurch gekennzeichnet, daß die dem Gerät zugewandte Stirnseite des Flansches konkav ausgebildet ist.

Hierdurch ist sichergestellt, daß bei mit dem freien Ende neben der Schüssel oder dergleichen abgestütztem und am Schüsselrand angehängtem Küchengerät von letzterem zum Griff hin wandernde Flüssigkeit oder dergleichen in der konkav gewölbten Stirnseite des Flansches gesammelt und in die Schüssel abgeleitet wird.

Außerdem ist es zur Handhabungserleichterung vorteilhaft, wenn der Stiel zwischen der Verdickung und dem Flansch über seine gesamte Länge mindestens

- 4 -

annähernd gleiche Querschnitte aufweist.

Weitere vorteilhafte Ausgestaltungen des vorbeschriebenen Griffes sind in den Ansprüchen 7 und 8 offenbart.

Ein Ausführungsbeispiel der Erfindung ist in den Zeichnungen dargestellt und wird im folgenden näher beschrieben.

Es zeigen:

Fig. 1 einen Schneebesen in perspektivischer Darstellung;

Fig. 2 und 3 desgleichen in weiteren Gebrauchsstellungen.

Hierbei ist der erfindungsgemäße Stiel 1 einstückig aus Kunststoff hergestellt und am Schneebesen unlösbar befestigt, wobei die Endteile des Schneebesens beim Urformen des Stieles umspritzt werden können.

Am freien Ende des Stieles 1 ist eine pilzkopfartige Verdickung 2 mit einer Aufhängeöse 3 angeformt. Am geräteseitigen Ende des Stieles 1 ist ein Flansch 4 angeformt, dessen der Verdickung 2 zugewandte Stirnseite 5 konvex und dessen andere, dem Gerät zugewandte Stirnseite 6 konkav gewölbt ist.

Zwischen der Verdickung 2 und dem Flansch 4 hat der Stiel 1 über seine gesamte Länge gleiche, kreisförmige Querschnitte.

Die Durchmesser der kreisförmig profilierten Verdickung 2 und des ebenfalls kreisförmige Querschnitte aufweisenden Flansches 4 sind jeweils mehr als doppelt so groß als der Stieldurchmesser.

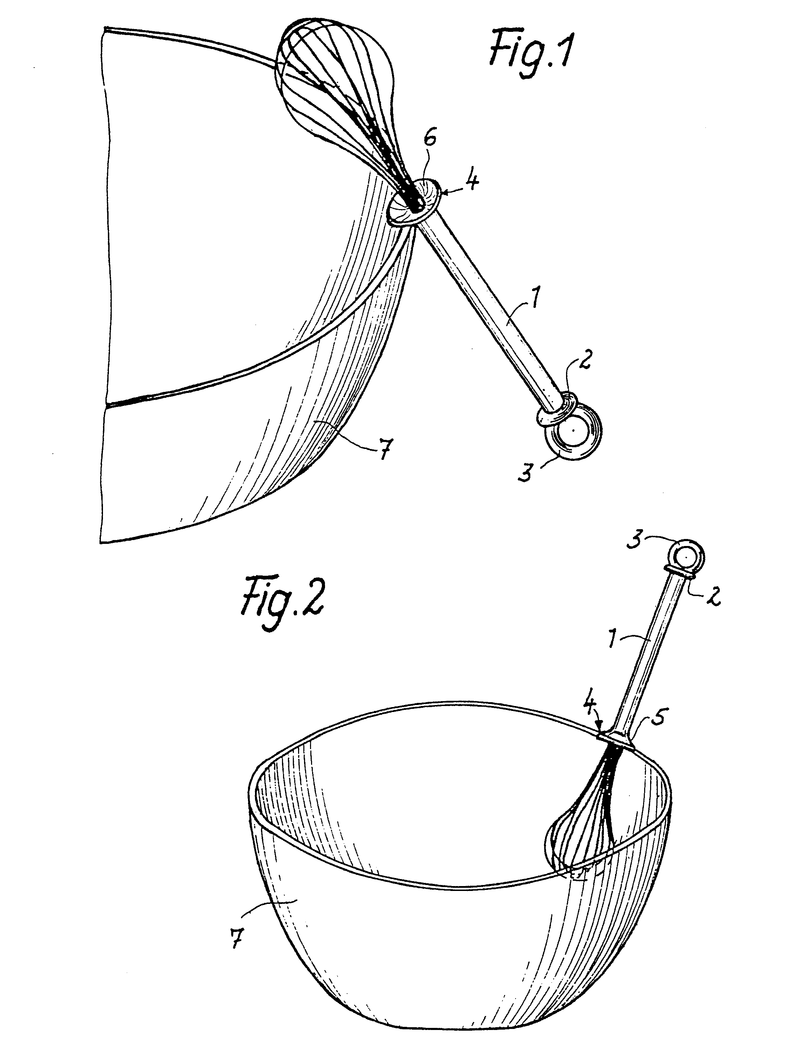

In Fig. 1 ist der Schneebesen mit der Aufhängeöse 3 neben einer Schüssel 7 sich abstützend angeordnet und mit dem Flansch 4 an den Rand der Schüssel 7 angehängt.

Gemäß Fig. 2 ist der Schneebesen in die Schüssel 7 zielend gerichtet und mit dem Flansch 4 am Rand der Schüssel 7 angehängt.

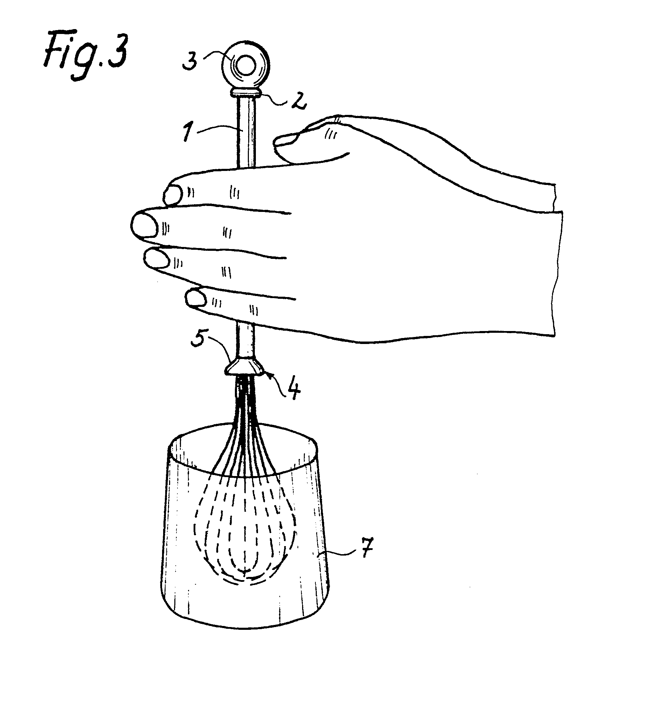

Fig. 3 demonstriert die leichte Handhabung des Schneebesens beim Quirlen, wobei der Stiel 1

- 6 -

zwischen den Händen durch die Verdickung 2 und
den Flansch 4 stets lagerichtig geführt wird.

Die Erfindung ist nicht auf das Ausführungsbeispiel
beschränkt, sondern kann im Rahmen der Offenbarung
vielfach verändert werden.

**0187208**

- 7 -

Patentansprüche:

1. Griff für Küchengeräte wie Schneebesen, Quirle, Salatbestecke und dergleichen, bestehend aus einem am Küchengerät befestigbaren bzw. mit diesem einstückig ausgebildeten Stiel mit einer Verdickung am freien Endteil, wobei der Stiel im wesentlichen kreisförmige Querschnitte aufweist und die Verdickung etwa pilzförmig überstehend ausgebildet ist, dadurch gekennzeichnet, daß am geräteseitigen Endteil des Stieles (1) ein etwa radial vorstehender Flansch (4) angeordnet ist.

2. Griff nach Anspruch 1, dadurch gekennzeichnet, daß der Flansch (4) zumindest annähernd die Form eines Kreises aufweist und daß der Flanschdurchmesser mehr als dem doppelten Stieldurchmesser entspricht.

3. Griff nach Anspruch 1 oder 2, dadurch gekennzeichnet, daß der Flansch (4) und die Verdickung am Stiel (1) angeformt sind.

- 8 -

4. Griff nach einem der vorherigen Ansprüche,
   dadurch gekennzeichnet, daß die dem Gerät
   abgewandte Stirnseite (5) des Flansches (4)
   konvex gewölbt ist.

5. Griff nach einem der vorherigen Ansprüche,
   dadurch gekennzeichnet, daß die dem Gerät
   zugewandte Stirnseite (6) des Flansches (4)
   konkav ausgebildet ist.

6. Griff nach einem der vorherigen Ansprüche, dadurch gekennzeichnet, daß der Stiel (1) zwischen
   der Verdickung (2) und dem Flansch (4) über
   seine gesamte Länge mindestens annähernd gleiche
   Querschnitte aufweist.

7. Griff nach einem der vorherigen Ansprüche,
   dadurch gekennzeichnet, daß der Stiel (1)
   zwischen der Verdickung (2) und dem Flansch (4)
   eine aufgerauhte Oberfläche aufweist.

8. Griff nach Anspruch 7, dadurch gekennzeichnet,
   daß am Stiel (1) zwischen der Verdickung (2)
   und dem Flansch (4) eine Mehrzahl auf den Umfang verteilt angeordnete und im wesentlichen
längs verlaufende Rippen vorgesehen, insbesondere
angeformt sind.

*Fig.1*

6
4
1
2
3
7

*Fig.2*

3
2
1
4
5
7

*Fig.3*

# EUROPÄISCHER RECHERCHENBERICHT

**0187208**
Nummer der Anmeldung

EP 85 11 3272

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | NL-A-6 512 654  (TIGER PLASTICS)<br><br>* Abbildung 1 *<br><br>--- | 1,2,4-6 | A 47 J   43/10<br>A 47 J   43/28 |
| X | CH-A-  445 772  (DE PONS)<br><br>* Abbildung  1; Spalte 1, Zeilen 23-26; Ansprüche 4,5 *<br><br>--- | 1,3,5,6 | |
| Y,D | DE-U-8 212 981  (REPPEL & VOLLMANN)<br>* Abbildung 1 * | 1 | |
| A | | 3,6 | |
| | --- | | |
| Y | US-A-2 853 780  (BULL)<br>* Abbildung  1; Spalte 1, Zeilen 59-68 * | 1 | RECHERCHIERTE SACHGEBIETE (Int. Cl 4) |
| A | | 2-5 | A 47 J |
| | --- | | |
| Y | GB-A-  165 265  (DEPOE)<br>* Abbildung 1 * | 1 | |
| A | | 2,6 | |
| | --- | | |
| A | DE-A-1 454 027  (LANZ)<br>* Abbildung 1; Anspruch 5 *<br><br>----- | 7,8 | |

Der vorliegende Recherchenbericht wurde für alle Patentansprüche erstellt.

| Recherchenort<br>DEN HAAG | Abschlußdatum der Recherche<br>10-04-1986 | Prüfer<br>BEUGELING G.L.H. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82